# EUROPÄISCHE PATENTANMELDUNG

(11) **EP 2 119 736 A1**
(43) Veröffentlichungstag der Anmeldung: **18.11.2009**
(21) Anmeldenummer: 08009064.0
(22) Anmeldetag: 16.05.2008
(51) Int. Cl.: C08G 18/28, C08G 18/38

(54) **Stabile nanopartikelhaltige Polyisocyanate**

(71) Anmelder: Bayer MaterialScience AG, 51368 Leverkusen (DE)
(72) Erfinder: Nennemann, Arno Dr., 51469 Bergisch Gladbach (DE); Dörr, Sebastian Dr., 40597 Düsseldorf (DE); Pyrlik, Oliver Dr., 51373 Leverkusen (DE)

(57) **Zusammenfassung**

Die vorliegende Erfindung betrifft unblockierte nanopartikelmodifizierte Polyisocyanate, die sich durch eine erhöhte Stabilität im NCO-Gehalt auszeichnen.

## Beschreibung

Die vorliegende Erfindung betrifft unblockierte nanopartikelmodifizierte Polyisocyanate, die sich durch eine erhöhte Stabilität im NCO-Gehalt auszeichnen.

In einer Reihe an Patenten werden oberflächenfunktionalisierte Partikel mit potentiell gegenüber den Lackharzen reaktiven Gruppen und deren Einsatz in Beschichtungen beschrieben (EP-A 0 872 500, WO 2006/018144, DE-A 10 2005 034348, DE-A 199 33 098, DE 102 47 359). Unter anderem handelt es sich dabei um blockierte Isocyanatgruppen tragende Nanopartikel und deren Dispersionen, die in Abmischung mit Bindemitteln eingesetzt werden. Diese sind hinsichtlich ihres NCO-Gehaltes auch bei längerer Lagerung stabil und bauen diesen nicht ab.

Aus EP-A 0 872 500 und WO 2006/018144 sind beispielsweise kolloidale Metalloxide bekannt, deren Nanopartikeloberflächen über kovalente Anbindung von Alkoxysilanen modifiziert wurden. Die zur Modifizierung eingesetzten Alkoxysilane sind Additionsprodukte aus Aminoalkoxysilanen und blockierten, monomeren Isocyanaten. Derartig modifizierte Metalloxide werden dann mit den Bindemitteln und Härtern gemischt bzw. als Isocyanatkomponente zur Herstellung von Lacken eingesetzt. Erfindungswesentlich ist hier die Anwesenheit von Wasser und Alkohol im Herstellprozeß zur Hydrolyse der Alkoxygruppen mit folgender Kondensation an den Partikeloberflächen, womit eine kovalente Anbindung erreicht wird. Ebenfalls erfindungswesentlich ist eine Blockierung freier NCO-Gruppen, um eine Reaktion mit Wasser und alkoholischem Lösungsmittel zu unterbinden. Es handelt sich hier somit um modifizierte Nanopartikel und nicht um nanopartikelhaltige Polyisocyanate. Demnach sind die Nanopartikel bei Reaktion kovalent in die Lackmatrix eingebunden und dominieren somit die Lackmatrix, was erfahrungsgemäß zu Einbußen in der Flexibilität führen kann. Nachteilig ist außerdem, dass bedingt durch diesen Prozess, der den Einsatz von Wasser und alkoholischem Lösungsmittel wesentlich macht, keine unblockierten Polyisocyanate eingesetzt werden können.

In Farbe und Lack 7 (2007), S. 40ff wird von der Koagulation nanoskaliger Silicapartikel durch Zugabe von Polyisocyanaten zu einer Zweikomponenten-Lackformulierung berichtet. Die Silicapartikel befinden sich in der Polyolphase, das Polyisocyanat wird als zweite Komponente hinzugefügt. Durch Zugabe von Carbonsäuren in die Mischung aus Polyol und Silicapartikel wird die Koagulation nach Abmischung mit Polyisocyanat unterdrückt. Nicht beschrieben sind entsprechende Formulierungen als lagerstabile Produkte in Polyisocyanat bei denen der Isocyanatgehalt nicht im Laufe der Zeit verringert wird. Carbonsäuren können durch Reaktion mit Polyisocyanat reagieren und zu unerwünschten Nebenreaktionen führen und damit die Lackeigenschaften beeinträchtigen.

Aus den Anmeldungen Nr. DE 10 2006 054289 und EP 07021690.2 sind kolloidal stabile, transparente bzw. transluzente nanopartikelhaltige Polyisocyanate bekannt, welche durch Modifizierung von Polyisocyanaten mit Aminoalkoxysilanen bzw. Aminoalkoxysilanen und Polydimethylsiloxanen und Zugabe von Nanopartikeln erhalten werden. Solche nanopartikelhaltigen Polyisocyanate sind jedoch bei Lagerung hinsichtlich ihres NCO-Gehaltes je nach verwendetem Lösemittel nicht stabil.

Ausgehend vom Stand der Technik war es nun die Aufgabe, unblockierte nanopartikelhaltige Polyisocyanate insbesondere für 2K-Polyurethananwendungen bereitzustellen.

Es wurde nun überraschenderweise gefunden, dass sich in solche Polyisocyanate erhalten lassen, in dem vor Kontakt der Nanopartikel mit dem zu modifizierenden Polyisocyanat, die Partikel speziell oberflächen modifiziert wurden.

Gegenstand der vorliegenden Erfindung ist daher ein Verfahren zur Herstellung nanopartikelmodifizierter Polyisocyanate mit freien NCO-Gruppen, bei dem
A) Nanopartikel mit einer mittels dynamischer Lichtstreuung bestimmten mittleren Partikelgröße von kleiner als 200 nm mit
B) Alkoxysilyl- und NCO-gruppenhaltigen Addukten der Formel (I)

   OCN-R¹-NHCO-QR²Z-SiXₐY₃₋ₐ (I)

   wobei
   - R¹: eine C₁-C₁₄ lineare oder cyclische aliphatische Gruppe oder eine C₆-C₁₄ araliphatische Gruppe oder aromatische Gruppe,
   - R²: gilt für Q = N und stellt Wasserstoff, eine C₁-C₁₂-Alkylgruppe oder eine C₆-C₂₀-Arylgruppe oder Aralkylgruppe oder einen Asparaginsäureester-Rest dar,
   - Q: Sauerstoff, Schwefel, Stickstoff,
   - X: eine hydrolysierbare Gruppe,
   - Y: gleiche oder verschiedene Alkylgruppen,
   - Z: eine C₁-C₁₂-Alkylengruppe und
   - a: eine ganze Zahl von 1 bis 3 ist, umgesetzt und anschließend mit
C) Polyisocyanaten mit freien NCO-Gruppen abgemischt werden.

Die in A) eingesetzten Partikel werden bevorzugt als Dispersion in das erfindungsgemäße Verfahren eingesetzt. Diese Dispersionen sind bevorzugt in einem organischen Lösemittel als Dispergiermittel.

Beispielsweise geeignete Lösemittel sind Methanol, Ethanol, i-Propanol, Aceton, 2-Butanon, Methyl-isobutylketon, sowie die an sich in der Polyurethanchemie gängigen Lösemittel wie Butylacetat, Ethylacetat, 1-Methoxy-2-propylacetat, Toluol, Xylol, Solventnaphta, 1,4-Dioxan, Diacetonalkohol, N-Methylpyrrolidon, Dimethylacetamid, Dimethylformamid, Dimethylsulfoxid oder beliebige Gemische solcher Lösungsmittel.

Bevorzugte organische Lösemittel sind solche der vorstehend genannten Art ohne gegenüber NCO-Gruppen reaktive Gruppen. Dies sind beispielsweise Butylacetat, Ethylacetat, 1-Methoxy-2-propylacetat, Toluol, 2-Butanon, Xylol, Solventnaphta, 1,4-Dioxan, Diacetonalkohol, N-Methylpyrrolidon, Dimethylacetamid, Dimethylformamid, Dimethylsulfoxid oder beliebige Gemische solcher Lösungsmittel.

Besonders bevorzugte organische Lösemittel sind Butylacetat, 1-Methoxy-2-propylacetat, Ethylacetat, Toluol, Xylol, Solventnaphta, Methylethylketon sowie deren Mischungen.

Die in A) eingesetzten Partikel sind typischerweise anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide. Bevorzugt sind Siliziumoxid, Aluminiumoxid, Ceroxid, Zirkonoxid, Nioboxid und Titanoxid. Ganz besonders bevorzugt sind Siliziumoxid-Nanopartikel.

Die in A) eingesetzten Partikel weisen bevorzugt mittlere Partikelgrößen mittels dynamischer Lichtstreuung in Dispersion bestimmt als Z-Mittelwert von 5 bis 100 nm, besonders bevorzugt 5 bis 50 nm auf.

Bevorzugt weisen wenigstens 75 %, besonders bevorzugt wenigstens 90 %, ganz besonders bevorzugt wenigstens 95 % aller in A) eingesetzten Partikel die vorstehend definierten Größen, auf.

Bevorzugt sind die in A) eingesetzten Partikel bereits anderweitig beispielsweise durch Silanisierung gemäß DE-A 19846660 oder WO 03/44099 oberflächenmodifiziert.

Ferner oder stattdessen können die Oberflächen der in A) eingesetzten Partikel adsorptiv/assoziativ durch Tenside mit Kopfgruppen entsprechender Wechselwirkungen zu den Teilchenoberflächen oder Blockcopolymere modifiziert sein, wie beispielsweise in WO 2006/008120 bzw. Foerster, S. & Antonietti, M., Advanced Materials, 10, no. 3, (1998) 195 beschrieben.

Bevorzugte Oberflächenmodifizierung ist die Silanisierung mit Alkoxysilanen und/oder Chlorsilanen. Ganz besonders bevorzugt handelt es sich um Silane, die neben den Alkoxygruppen interte Alkyl- oder Aralkylreste aber keine weiteren funktionellen Gruppen tragen.

Beispiele kommerzieller Partikeldispersionen, wie sie sich für A) eignen sind Organosilicasol^{™} (Nissan Chemical America Corporation, USA), Nanobyk^{®} 3650 (BYK Chemie, Wesel, Deutschland), Hanse XP21/1264 oder Hanse XP21/1184 (Hanse Chemie, Hamburg, Deutschland), HIGHLINK^{®} NanO G (Clariant GmbH, Sulzbach, Deutschland). Geeignete Organosole weisen einen Feststoffgehalt von 10 bis 60 Gew.-%, bevorzugt 15 bis 50 Gew.-% auf.

Addukte B der Formel (I) sind beispielsweise durch Umsetzung von Alkoxysilanen HQR²Z-SiXₐY₃₋ₐ (III) mit unblockierten monomeren Diisocyanaten OCN-R¹-NCO (II) erhältlich.

Bevorzugt ist in Formel (III) und damit auch in Form (I) die Gruppe X eine Alkoxy- oder Hydroxygruppe, besonders bevorzugt Methoxy, Ethoxy, Propoxy oder Butoxy.

Bevorzugt steht Y in Formel (III) und damit auch in Form (I) für eine lineare oder verzweigte C₁-C₄-Alkylgruppe, bevorzugt Methyl oder Ethyl.

Z ist in Formel (III) und damit auch in Form (I) bevorzugt eine lineare oder verzweigte C₁-C₄-Alkylengruppe.

Bevorzugt steht a in Formel (III) und damit auch in Form (I) für 1 oder 2.

Bevorzugt ist in Formel (III) die Gruppe -QH eine gegenüber Isocyanaten unter Urethan-, Harnstoff- oder Thioharnstoffbildung reagierende Gruppe. Dies sind bevorzugt OH-, SH- oder NH-Gruppen, besonders bevorzugt NH-Gruppen.

Ist Q eine Sauerstoff- oder eine Schwefel-Gruppe so ist R² nicht vorhanden. Im Falle von Stickstoff als Q ergeben die Aminogruppen entsprechend (III) die Formel-NHR².

R² stellt Wasserstoff, eine C₁-C₁₂-Alkylgruppe oder eine C₆-C₂₀-Aryl- oder Aralkylgruppe oder einen Asparaginsäureester-Rest dar. Bevorzugt ist R² eine C₁-C₁₂ - Alkylgruppe, hier besonders bevorzugt eine C₁-C₄-Alkylgruppe oder ein Asparaginsäureester. Ganz besonders bevorzugt ist R² ein Asparaginsäureester-Rest der Formel R³OOC-CH₂-CH(COOR⁴)-.

R³, R⁴ sind bevorzugt gleiche oder verschiedene Alkylreste, die gegebenenfalls auch verzweigt sein können, mit 1 bis 22 Kohlenstoffatomen, bevorzugt 1 bis 4 Kohlenstoffatomen. Besonders bevorzugt sind R³, R⁴ jeweils Methyl- oder Ethylreste.

Solche alkoxysilanfunktionellen Asparaginsäureester sind, wie in US 5364955 beschrieben, in an sich bekannter Weise durch Addition von aminofunktionellen Alkoxysilanen an Malein- oder Fumarsäureester erhältlich.

Aminofunktionelle Alkoxysilane, wie sie als Verbindungen der Formel (III) oder zur Herstellung der alkoxysilylfunktionellen Asparaginsäureester eingesetzt werden können, sind beispielsweise 2-Aminoethyldimethylmethoxysilan, 3-Aminopropyltrimethoxysilan, 3-Aminopropyltriethoxysilan, 3-Aminopropylmethyldimethoxysilan, Aminopropylmethyl-diethoxysilan.

Ferner können als Aminoalkoxxysilane mit sekundären Aminogruppen der Formel (III) in B) auch N-Methyl-3-aminopropyltrimethoxysilan, N-Methyl-3-aminopropyltriethoxysilan, N-Phenyl-3-aminopropyltrimethoxysilan, Bis-(gamma-trimethoxysilylpropyl)amin, N-Butyl-3-aminopropyltrimethoxysilan, N-Butyl-3-aminopropyltriethoxysilan, N-Ethyl-3-aminoisobutyltrimethoxysilan, N-Ethyl-3-aminoisobutyltriethoxysilan oder N-Ethyl-3-aminoisobutylmethyldimethoxysilan, N-Ethyl-3-aminoisobutylmethyldiethoxysilan sowie die analogen C₂-C₄-Alkoxysilane.

Geeignete Malein- oder Fumarsäureester zur Herstellung der Asparaginsäureester sind Maleinsäurediemethylester, Maleinsäurediethylester, Maleinsäuredi-n-butylester sowie die entsprechenden Fumarester. Maleinsäuredimethylester und Maleinsäurediethylester sind besonders bevorzugt.

Bevorzugtes Aminosilan zur Herstellung der Asparaginsäureester ist 3-Aminopropyltrimethoxysilan oder 3-Aminopropyltriethoxysilan.

Die Umsetzung der Malein- bzw. Fumarsäureester mit den Aminoalkylalkoxysilanen erfolgt innerhalb eines Temperaturbereichs von 0 bis 100 ° C, wobei die Mengenverhältnisse in der Regel so gewählt werden, daß die Ausgangsverbindungen im molaren Verhältnis 1:1 1 eingesetzt werden. Die Umsetzung kann in Substanz oder auch in Gegenwart von Lösungsmitteln wie z.B. Dioxan durchgeführt werden. Die Mitverwendung von Lösungsmitteln ist jedoch weniger bevorzugt. Selbstverständlich können auch Mischungen verschiedener 3-Aminoalkylalkoxysilane mit Mischungen von Fumar- und/oder Maleinsäureestern umgesetzt werden.

Bevorzugte Alkoxysilane (III) zur Modifizierung der Diisocyanate sind sekundäre Aminosilane mit R² = C₁-C₁₂ der vorstehend beschriebenen Art, besonders bevorzugt Asparaginsäureester mit R² = R³OOC-CH₂-CH(COOR⁴)- der vorstehend beschriebenen Art sowie Di- bzw. Monoalkoxysilane.

Die vorstehend genannten Alkoxysilane können einzeln aber auch in Mischungen zur Modifizierung eingesetzt werden.

Geeignete Diisocyanate der Formel (II) sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2- Methyl-1,5-diiso-cyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato- 3,3,5-trimethyl-5-isocyanatomethy-lcyclohexan (Isophorondiisocyanat, IPDI), 4,4'- Diisocyanatodicyclohexylmethan, 1,-Isocyanato-1-methyl-4(3)isocyanato-methylcyclohexan, Bis-(isocyanatomethyl)-norboman, 1,3- und 1,4-Bis-(1-isocyanato-1- methylethyl)-benzol (TMXDI), m-Xylylendiisocyanat (XDI), 2,4- und 2,6-Diisocyanatotoluol (TDI), 2,4'- und 4,4'- Diisocyanatodiphenylmethan (MDI), 1,5-Diisocyanatonaphthalin oder beliebige Gemische solcher Diisocyanate.

Bevorzugt werden in B) Addukte der vorstehend genannten Art auf Basis von IPDI, MDI, TDI, HDI oder deren Gemischen eingesetzt. Besonders bevorzugt sind Addukte auf Basis von IPDI und HDI, ganz besonders bevorzugt auf Basis HDI.

Entsprechend ist R¹ in Formel (II) und Formel (I) damit eine C₁-C₁₄ lineare, verzweigte oder cyclische aliphatische Gruppe oder eine C₆-C₁₄ araliphatische oder aromatische Gruppe. Bevorzugt ist R¹ eine C₄-C₁₄, besonders bevorzugt eine lineare oder cyclische aliphatische oder araliphatische oder aromatische C₆-C₁₃ Gruppe.

R¹ entspricht damit bevorzugt einer der Strukturformeln: 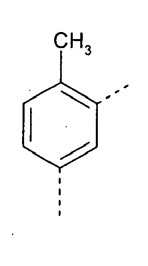 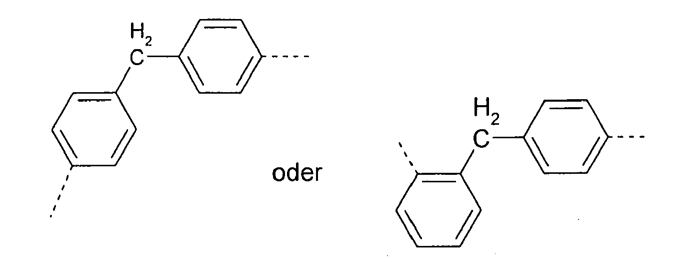 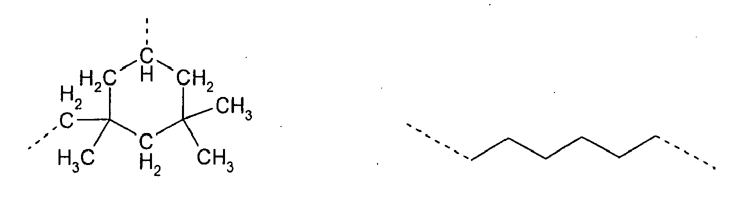 Besonders bevorzugt entspricht R¹ damit einer der Formeln:

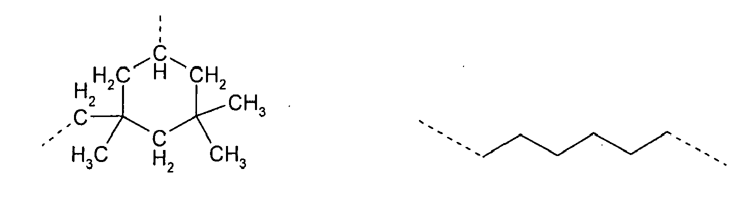

Prinzipiell können bei der Reaktion aus (II) und (III) anstelle der Diisocyanate der Formel (II) auch oligomere Isocyanate wie für C) beschrieben eingesetzt werden, was jedoch nicht bevorzugt ist.

Bei der Reaktion zwischen Isocyanat der Formel (II) und Alkoxysilans der Formel (III) beträgt das Verhältnis von freien NCO-Gruppen aus (II) zu den NCO-reaktiven Gruppen Q aus (III) bevorzugt 1 : 0,01 bis 1 : 0,75, besonders bevorzugt 1 : 0,05 bis 1 : 0,5, ganz besonders bevorzugt 1:0,1 bis 1:0,4.

Prinzipiell ist es natürlich auch möglich, höhere Anteile an NCO-Gruppen mit den vorgenannten Alkoxysilanen zu modifizieren, jedoch ist darauf zu achten, daß keine Vergelung auftritt bzw. bei Verdünnung in Isocyanat-inerten Lösungsmitteln gearbeitet wird.

Die Reaktion von Aminosilan (III) und Diisocyanat (II) erfolgt bei 0 bis 100 °C, bevorzugt bei 0 bis 50 °C, besonders bevorzugt bei 15 bis 40 °C. Gegebenenfalls kann eine exotherme Reaktion durch Kühlung kontrolliert werden.

Die Modifizierung der in A) eingesetzten Nanopartikel mit dem Modifikator B) erfolgt in einem Gewichtsverhältnis von Modifikator B) zur Summe der Mengen von Modifikator B) und Feststoff an Nanopartikeln aus A) von typischerweise 1 bis 50 %, bevorzugt 10 bis 50 %, besonders bevorzugt 20 bis 40 %.

Werden die Partikel in A) als Dispersion eingesetzt so hat nach der Umsetzung von A) mit B) das so erhaltene modifizierte Organosol einen Festkörper von 1 bis 70 Gew.-%, bevorzugt 5 bis 50 Gew.-%, besonders bevorzugt 10 bis 40 Gew.-%.

Die Umsetzung von A) mit B) erfolgt bei Temperaturen von typischerweise 0 °C bis 100 °C, bevorzugt 20 bis 90 °C, besonders bevorzugt 40 bis 80 °C. Die Reaktionszeit beträgt typischerweise 1 bis 24 Stunden, bevorzugt 2 bis 12 Stunden, besonders bevorzugt 4 bis 10 Stunden.

In C) können grundsätzlich alle dem Fachmann an sich bekannten NCO-funktionellen Verbindungen mit mehr als einer NCO-Gruppe pro Molekül eingesetzt werden. Diese weisen bevorzugt NCO-Funktionalitäten von 2,3 bis 4,5, Gehalte an NCO-Gruppen von 11,0 bis 24,0 Gew.-% und Gehalte an monomeren Diisocyanaten von bevorzugt weniger als 1 Gew.-%, besonders bevorzugt kleiner 0,5 Gew.-% auf.

Solche Polyisocyanate sind durch Modifizierung einfacher aliphatischer, cycloaliphatischer, araliphatischer und/oder aromatischer Diisocyanate zugänglich und können Uretdion-, Isocyanurat-, Allophanat-, Biuret-, Iminooxadiazindion- und/oder Oxadiazintrionstrukturen aufweisen. Außerdem können solche Polyisocyanate als NCO-gruppenhaltige Prepolymere eingesetzt werden. Derartige Polyisocyanate sind beispielsweise in Laas et al. (1994), J. prakt. Chem. 336, 185-200 oder in Bock (1999), Polyurethane für Lacke und Beschichtungen, Vincentz Verlag, Hannover, S. 21-27, beschrieben.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanaten des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2- Methyl-1,5-diiso-cyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato- 3,3,5-trimethyl-5-isocyanatomethy-lcyclohexan (Isophorondiisocyanat, IPDI), 4,4'- Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(1-isocyanato-1- methylethyl)-benzol (TMXDI), 2,4- und 2,6-Diisocyanatotoluol (TDI), 2,4'- und 4,4'- Diisocyanatodiphenylmethan (MDI), 1,5-Diisocyanatonaphthalin oder beliebige Gemische solcher Diisocyanate.

Ebenfalls möglich ist der Einsatz von Polyisocyanaten, welche eine anorganische Modifizierung über NCO-reaktive Alkoxysilane oder Siloxane aufweisen. Diese sind beispielsweise in den Anmeldungen Nr. DE 10 2006 054289 und EP 07021690.2 beschrieben.

Hierbei werden unter C) beschriebene Polyisocyanate zusätzlich mit Alkoxysilanen der Formel (III) umgesetzt, wie bereits für monomere Isocyanate der Formel (II) ausgeführt. Die Bevorzugung ist entsprechend. Bevorzugt ist jedoch der Einsatz unmodifizierter Polyisocyanate.

Bevorzugt werden in C) Polyisocyanate der vorstehend genannten Art auf Basis von IPDI, MDI, TDI, HDI oder deren Gemischen eingesetzt. Besonders bevorzugt werden Polyisocyanate auf Basis IPDI und HDI eingesetzt.

Die Mengenverhältnisse von modifizierten Partikeln und Polyisocyanat C) werden typischerweise so gewählt, dass ein Partikelgehalt von 1 bis 70 Gew.-%, bevorzugt 5 bis 60, besonders bevorzugt 10 bis 50 Gew.-% jeweils auf die Feststoffe bezogen resultiert.

Derart mit geschützten Organosolen modifizierte Polyisocyanate zeichnen sich dadurch aus, daß der NCO-Gehalt nach 90 Tagen mehr als 80 % des anfänglich gemäß DIN EN ISO 11909 gemessenen NCO-Wertes beträgt, bevorzugt jedoch größer 90 %, ganz besonders bevorzugt größer 95 %.

Ein weiterer Gegenstand der Erfindung sind die nach dem erfindungsgemäßen Verfahren erhältlichen Polyisocyanate sowie deren Verwendung in Beschichtungsmitteln, Kleb- und Dichtstoffen.

Ferner sind Substrate ein Gegenstand der Erfindung, die unter Verwendung der erfindungsgemäßen Polyisocyanate beschichtet oder verklebt wurden.

### Beispiele

Alle Prozentangaben sind, sofern nicht abweichend vermerkt, als Gewichtsprozent zu verstehen.

Desmodur^{®} N 3300: Hexamethylendiisocyanat Trimerisat; NCO-Gehalt 21,8 +/- 0,3 Gew.-%, Viskosität bei 23°C ca. 3000 mPas, Bayer MaterialScience AG, Leverkusen, DE

Organosilicasol^{™} MEK-ST: kolloidales Silica dispergiert in Methylethylketon, Teilchengröße 10-15 nm (Herstellerangabe), 30 wt% SiO₂, < 0,5 wt% H₂O, < 5 mPa s Viskosität, Nissan Chemical America Corporation, USA.

### Bestimmung der Teilchengröße

Die Teilchengrößen wurden mittels Dynamischer Lichtstreuung mit einem HPPS particle size analyzer (Fa. Malvern, Worcestershire, UK) bestimmt. Die Auswertung erfolgte über die Dispersion Technology Software 4,10. Um Mehrfachstreuung zu vermeiden, wurde eine hochverdünnte Dispersion der Nanopartikel hergestellt. Ein Tropfen der Nanopartikeldispersion wurde in eine Küvette enthaltend ca. 2 ml des gleichen Lösemittels wie die Dispersion gegeben, geschüttelt und im HPPS analyzer bei 20 bis 25 °C vermessen. Die relevanten Parameter des Dispergiermediums - Temperatur, Viskosität und Brechungsindex - wurden bei der Auswertung berücksichtigt. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, daß der Polydispersitätsindex < 0,5 war.

Bestimmung des NCO-Gehaltes erfolgte nach DIN EN ISO 11909.

### Beispiel 1a)

N-(3-Trimethoxysilylpropyl)asparaginsäurediethylester wurde, entsprechend der Lehre aus US-A 5 364 955, Beispiel 5, durch Umsetzung von äquimolaren Mengen 3-Aminopropyltrimethoxysilan mit Maleinsäurediethylester hergestellt

### Beispiel 1b): Herstellung des Modifikators

In einer Standard-Rührapparatur wurden 546,1 g (1 val) Hexamethylendiisocyanat bei Raumtemperatur vorgelegt und Stickstoff mit 2L/h übergeleitet. Dann wurden innerhalb von 2 h bei Raumtemperatur 453,9 g (0,2 val) des Alkoxysilans aus Beispiel 1a zugetropft. Die Temperatur wurde dabei 40 °C gehalten, bis der theoretische NCO-Gehalt erreicht war. Es wurde ein klares, leicht gelbliches Addukt mit einem NCO-Gehalt von 21,6 % erhalten.

### Beispiel 1c): Herstellung des modifizierten Organosols

In einer Standard-Rührapparatur wurden 144,4 g des Adduktes aus Beispiel 1b bei Raumtemperatur vorgelegt und Stickstoff mit 2L/h übergeleitet und unter Rückfluß auf 72 °C erhitzt. 1155,6 g Organosilicasol^{™} MEK-ST wurden innerhalb von 30 Minuten zugetropft und die Temperatur von 72 °C für 8 Stunden gehalten und dann abgekühlt.

Es wurde eine transluzente Dispersion mit 0,85 % NCO-Gehalt und einem Festkörper von 37,8 % erhalten.

### Beispiel 1d): Herstellung eines modifizierten Polyisocyanats entsprechend DE 10 2006 054289

In einer Standard-Rührapparatur wurden 567,7 g (1 val) Desmodur^{®} N3300 in 100 g Methylethylketon bei Raumtemperatur vorgelegt und Stickstoff mit 2L/h übergeleitet. Dann wurden innerhalb von 3 h bei Raumtemperatur 232,3 g (0,2 val) des Alkoxysilans aus Beispiel 1 in 100 g Butylacetat zugetropft. Man erhielt ein farbloses, flüssiges Polyisocyanat mit folgenden Kennzahlen: Feststoffgehalt 79 Gew.-%, NCO-Gehalt 9,6 %.

### Beispiel 2: Vergleichsbeispiel nach DE 10 2006 054289

35,6 g des silanfunktionellen Polyisocyanates aus Beispiel 1d wurden mit 93,75 g Organosilicasol^{™} MEK-ST und 20,65 g Butylacetat abgemischt. Es wurden 150 g eines nanopartikelmodifizierten Polyisocyanates mit 2,25 % NCO-Gehalt, einem Festkörper von 37,5 % und einem SiO2-Gehalt von ca. 50 % fest/fest erhalten.

### Beispiel 3a): erfindungsgemäßes Beispiel

234,4 g Desmodur N3300 wurden mit 1265,6 g des Organosols aus Beispiel 1c gemischt und am Rotationsverdampfer bei 60 °C und 120 mbar auf einen Feststoffgehalt von 47,8 % eingestellt. Es wurde eine transparentes Produkt mit einer Viskosität von ca. 20 mPas (23 °C), ca. 59 % SiO2 im Festkörper und einem NCO-Gehalt von 4,05 % erhalten.

### Beispiel 3b): erfindungsgemäßes Beispiel mit aminosilanmodifiziertem Polyisocyanat entsprechend DE 10 2006 054289

93,2 g des Polyisocyanats aus Beispiel 1d wurden mit 281,8 g des Organosols aus Beispiel 1c gemischt und am Rotationsverdampfer bei 60 °C und 120 mbar auf einen Feststoffgehalt von 54,8 % eingestellt. Es wurde eine transparentes Produkt mit einer Viskosität von ca. 50 mPas (23 °C), ca. 50 % SiO2 im Festkörper und einem NCO-Gehalt von 3,49 % erhalten.

**Tabelle 1. Beurteilung der NCO-Stabilität¹**

| | **Beispiel 2** | **Beispiel 3a** | **Beispiel 3b** |
|---|---|---|---|
| | **Vergleich** | **erfindungsgemäß** | **erfindungsgemäß** |
| **Zeit** | | **NCO-Gehalt / %** | |
| < 2h | 2,25 | 4,05 | 3,49 |
| 14 Tage | 0,99 | 4,05 | 3,36 |
| 21 Tage | 0,86 | 4 | 3,29 |
| 28 Tage | 0,88 | 3,97 | 3,21 |
| 56 Tage | 0,73 | 3,5 | 3,15 |
| 91 Tage | 0,68 | 3,88 | 3,04 |

| | | | |
|---|---|---|---|
| ¹ NCO-Gehaltsbestimmung entsprechend DIN EN ISO 11909 | | | |

Wie aus Tabelle 1 ersichtlich, sinkt der NCO-Gehalt eines Polyisocyanats enthaltend Organosilicasol^{™} MEK-ST von 2,25 % zu Beginn auf 0,68 % nach 91 Tagen. Der NCO-Gehalt geht entsprechend auf ca. 30 % zurück. Bei den erfindungsgemäßen Beispielen 3a und 3b beträgt der NCO-Gehalt nach 91 Tagen noch ca. 96 bzw. 87 % des Ausgangswertes.

### Anwendung der erfindungsgemäßen, nanopartikelmodifizierten Polyisocyanate:

Die nanopartikelmodifizierten Polyisocyanate sind entsprechend der in DE 10 2006 054289 beschriebenen nanopartikelmodifizierten Polyisocyanate für die Verbesserung der Härte bzw. Kratzfestigkeit im Vergleich zu den unmodifizierten Polyisocyanaten geeignet.

## Patentansprüche

1. Verfahren zur Herstellung nanopartikelmodifizierter Polyisocyanate mit freien NCO-Gruppen, bei dem
A) Nanopartikel mit einer mittels dynamischer Lichtstreuung bestimmten mittleren Partikelgröße von kleiner als 200 nm mit
B) Alkoxysilyl- und NCO-gruppenhaltigen Addukten der Formel (I)
OCN-R¹-NHCO-QR²Z-SiXₐY₃₋ₐ (I)
wobei
R¹ eine C₁-C₁₄ lineare oder eine C₃-C₁₄ cyclische aliphatische Gruppe oder eine C₆-C₁₄ araliphatische oder aromatische Gruppe,
R² gilt für Q = N und stellt Wasserstoff, eine C₁-C₁₂-Alkylgruppe oder eine C₆-C₂₀-Aryl- oder Aralkylgruppe oder einen Asparaginsäureester-Rest dar,
Q Sauerstoff, Schwefel, Stickstoff,
X eine hydrolysierbare Gruppe,
Y gleiche oder verschiedene Alkylgruppen,
Z eine C₁-C₁₂-Alkylengruppe und
a eine ganze Zahl von 1 bis 3 ist,
umgesetzt und anschließend mit
C) Polyisocyanaten mit freien NCO-Gruppen abgemischt werden.

2. Verfahren gemäß Anspruch 1, **dadurch gekennzeichnet, dass** die in A) eingesetzten Partikel als Dispersion in organischen Lösemitteln eingesetzt werden.

3. Verfahren gemäß Anspruch 2, **dadurch gekennzeichnet, dass** es sich bei dem Lösemittel um Butylacetat, 1-Methoxy-2-propylacetat, Ethylacetat, Toluol, Xylol, Solventnaphta, Methylethylketon sowie deren Mischungen handelt.

4. Verfahren gemäß einem der Ansprüche 1 bis 3, **dadurch gekennzeichnet, dass** es sich bei den in A) eingesetzten Partikeln um Siliziumoxid, Aluminiumoxid, Ceroxid, Zirkonoxid, Nioboxid oder Titanoxid handelt.

5. Verfahren gemäß einem der Ansprüche 1 bis 4, **dadurch gekennzeichnet, dass** die in A) eingesetzten Partikel mittlere Partikelgrößen mittels dynamischer Lichtstreuung in Dispersion bestimmt als Z-Mittelwert von 5 bis 50 nm aufweisen.

6. Verfahren gemäß einem der Ansprüche 1 bis 5, **dadurch gekennzeichnet, dass** die in A) eingesetzten Partikel oberflächenmodifiziert sind.

7. Verfahren gemäß einem der Ansprüche 1 bis 6, **dadurch gekennzeichnet, dass** in Formel (I)
R¹ eine linear- oder cycloaliphatische, araliphatische oder aromatische C₆-C₁₃ Gruppe,
R² für Q=Stickstoff eine C₁-C₄-Alkylgruppe oder ein Asparaginsäureesterrest der Formel R³OOC-CH₂-CH(COOR⁴)-
Q Sauerstoff, Schwefel, Stickstoff,
X eine Alkoxy- oder Hydroxygruppe,
Y eine lineare oder verzweigte C₁-C₄-Alkylgruppe
Z lineare oder verzweigte C₁-C₄-Alkylengruppe und
a 1 oder 2
ist.

8. Verfahren gemäß einem der Ansprüche 1 bis 7, **dadurch gekennzeichnet, dass** in C) Polyisocyanate auf Basis von IPDI, MDI, TDI, HDI oder deren Gemischen eingesetzt werden.

9. Nanopartikelmodifizierte Polyisocyanate mit freien NCO-Gruppen erhältlich nach einem Verfahren gemäß einem der Ansprüche 1 bis 8.

10. Verwendung nanopartikelmodifizierter Polyisocyanate mit freien NCO-Gruppen gemäß Anspruch 9 in Beschichtungsmitteln, Kleb- oder Dichtstoffen.

11. Beschichtete oder verklebte Substrate erhältlich unter Verwendung von nanopartikelmodifizierten Polyisocyanaten mit freien NCO-Gruppen gemäß Anspruch 9.
